# EUROPEAN PATENT SPECIFICATION

(11) **EP 0 504 610 B1**
(45) Date of publication and mention of the grant of the patent: **14.05.1997**
(21) Application number: 92102901.3
(22) Date of filing: 21.02.1992
(51) Int. Cl.: H02K 17/30, H01F 37/00

(54) **Device for reducing current peaks during starting of an asynchronous motor**
Vorrichtung zur Reduzierung von Anlaufstromspitzen eines Asynchronmotors
Dispositif pour réduire les pointes de courant pendant le démarrage d'un moteur asynchrone

(30) Priority: 20.03.1991 IT MI910746
(43) Date of publication of application: 23.09.1992
(73) Proprietor: GMV MARTINI S.p.A., I-20016 Pero (Milano) (IT)
(72) Inventor: Martini, Angelo, I-20016 Pero, Milano (IT)
(74) Representative: Lecce, Giovanni

(56) References cited:
- DE-A- 1 763 807
- FR-A- 2 176 761
- FR-A- 2 608 332
- GB-A- 2 157 087
- US-A- 2 913 640
- PATENT ABSTRACTS OF JAPAN vol. 8, no. 167 (E-258)(1604) 2 August 1984 ; & JP-A-59 063 960
- IEEE TRANSACTIONS ON INDUSTRY APPLICATIONS, vol. IA-20, no. 1, January 1984, New York US, pp. 46-55; F.M. BRUCE et al.: 'Reduced-voltage starting of squirrel-cage induction motors'

## Description

The present invention relates to a device for reducing current peaks during starting of an asynchronous electric motor.

More specifically the present invention relates to a device for reducing current peaks during starting of an asynchronous electric motor for control of hydraulic elevators.

As is known, the movement of passenger and/or freight elevators and the like with hydraulic drive is generally performed by the use of asynchronous electric motors whose starting can be the direct, star-triangle, resistance or electronic type or other equivalent systems.

Said starting, as is known, causes considerable shortcomings and limitations in said asynchronous motors due to the fact that in case of direct starting the sudden drawing of current from the supply network is in general at least three times as much as normally required during operation of the motor.

This momentary drawing of current results not only in a possible, early and undesired wear of the mechanical parts of the motor but also formation of the well known current peaks. For this reason the motor is provided in such a manner as to resist a current greater than that required for its normal duty with resulting additional problems of size, connection and others.

Star-triangle starting of an asynchronous motor is theoretically efficient but the motor is practically subjected to two starts. Indeed, the fluid operating it has a braking action during the exchange phase of the remote controlled switches and or switches so that initially and generally it includes a phase of insufficient power supply.

For this reason this type of starting, in addition to requiring momentary drain of current twice from the supply network with resulting associated current peaks, operative activation of the motor is quite difficult.

Resistance starting of an asynchronous motor displays different shortcomings such as for example heating of the resistances, sensitivity of the resistances to voltage differences, possible slightly retarded changeover of the remote controlled switches with resulting burning of the resistances, etc. All of these shortcomings make this type of starting system, overall, unreliable and of relatively short life.

Lastly, electronic starting of an asynchronous motor requires special and accurate settings by highly skilled personnel. This shortcoming and the overall delicacy of the equipment considerably affect the operating and maintenance costs of the motor.

From the foregoing it is seen that the principal shortcomings of asynchronous motors originate mainly in the current peaks, which occur during starting of the motors.

The purpose of the present invention is to provide a device for starting asynchronous electric motors which would not have the above described shortcomings. More specifically, the purpose of the present invention is to provide a device designed to reduce current peaks during starting of asynchronous motors for control of hydraulic elevators.

In accordance with the present invention these and other purposes are achieved by a device comprising substantially a metal nucleus inserted in a tubular body made of insulating material on which is arranged a copper wire winding connected to the phase of the motor and to a pair of switches and/or remote controlled switches respectively.

Said winding materializes an inductance which maintains a value essentially less than the current taken from the electric power network during starting of the motor and this is based on well known physical laws (Faraday-Newman-Leinz) and in relation to the structural conformation of said inductance.

Such a device is known from the publication "IEEE Transactions on Industry Applications", vol. IA-20, no. 1, January 1984, New York USA, pages 46-55.

Said device has the features of the preamble of Claim 1.

The device of the present invention is characterized by the fact that the winding of the inductor is immersed in and cooled by the same operating fluid as the motor, and is achieved by winding around the tubular body of the inductor the same wire coming from the winding of the motor.

Preferably the opposite ends of the tubular body are structurally formed in such a manner as to form a flange for containing the winding.

In addition the metal nucleus is preferably traversed longitudinally by a passage which lightens its weight and can be positioned stably in the tubular body by Seger cones or equivalent means.

The characteristics and advantages of the device of the present invention can be better understood from the following detailed description in which reference is made to the annexed drawings representing a preferred but nonlimiting form of embodiment of the present invention and wherein:
FIG. 1 is a schematic longitudinal cross section view of the device of the present invention, and
FIG. 2 shows an electrical diagram of a single-phase asynchronous motor for control of hydraulic traction elevators including the device of FIG. 1.

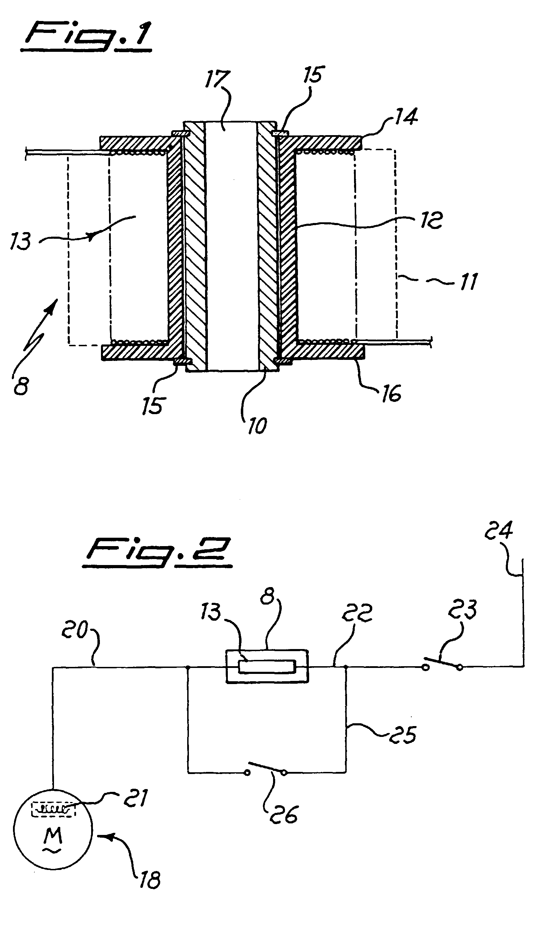

With reference to FIG. 1 the device (8) of the present invention comprises essentially a metal nucleus (10) inserted in a tubular body (12) made of insulating material, e.g. plastic, and bounded at its opposite ends by flanges (14,16).

On said tubular body (12) is a winding (13) consisting of copper wires positioned stably by the flanges (14,16). Said winding (13) materializes an inductance connected to the winding of the motor and to a pair of switches and/or remote controlled switches as specified below.

The winding or inductance (13) is preferably immersed in and cooled by the operating fluid of the motor which, in FIG. 1, is shown schematically in broken lines as a rectangle (11).

The winding or inductance (13) can be provided by winding around the tubular body (12) the same wire coming from the motor winding.

The metal nucleus (10) is stably positioned in the tubular body (12) by Seger cones (15) or equivalent means and traversed by a longitudinal passage (17) which reduces in this manner the total weight of the device (8).

It has been noted with surprise that the device (8) provided in accordance with the present invention as described above is capable of eliminating or reducing considerably the known current peaks during starting of an asynchronous motor for control of hydraulic-traction elevators because it holds substantially always constant the supply voltage of the motor on the basis of known physical laws (Faraday-Newman-Leinz). In practice, the device (8) of the present invention causes an initial drop in voltage and hence in current by inductance instead of resistances. This voltage drop in the starting phase of the motor (18) can have a preset value in relation to the structural conformation of the winding (13).

FIG. 2 shows by way of example an electrical diagram of a single-phase asynchronous motor (18) for control of hydraulic elevators including the device of FIG. 1. It is clear that if the motor (18) were the 3-phase type the electrical diagram would include three devices (8), i.e. one for each phase.

In said FIG. 2 the device (8) of the present invention is connected by a first wire (20) to the winding (21) of the motor (18) and by another wire (22) to a switch and/or remote controlled switch (23). The latter is connected in turn to the electric power line (24).

Another wire (25) connected to another switch (26) by-passes the device (8) and connects to the first wire (20) and to the second wire (22) respectively.

The function of the device (8) in activation of the motor (18) is as follows. Starting of the motor (18) is achieved by closing the switch (23) and holding open the switch (26). In this position of the switches (23,26) the current coming from the power supply line (24) passes from the wire (22) to the device (8), is 'filtered' by said device (8), passes from the wire (22) to the device (8), is 'filtered' by said device (8) and then sent over the wire (20) to the winding (21) of the motor (18) which begins its operational cycle reaching its nominal value.

Upon achievement of the operational cycle of the motor (18) the switch (26) is closed and the current can also by-pass the device (8) because the voltage now required for powering said motor (18) remains substantially constant, i.e. the conditions in which the undesired current peaks occur no longer exist.

In practice the device (8) of the present invention can be defined a 'variable filter-reducer of current'.

From the foregoing the advantages as well as the useful effects of the device of the present invention are evident. Thus for example the device of the present invention:
- prevents or considerably reduces current peaks upon starting of the motor,
- allows longer life of the mechanical and electrical parts of the motor, and
- holds overheating of the motor within normal values and the current peaks cannot be effected.

Alternatives and variations are possible within the scope of the appended claims

## Claims

1. A device for reducing current peaks during starting of an asynchronous motor (18), having windings (21), for control of an hydraulic elevator associated therewith, said device comprising an inductor consisting of a winding (13) of copper wire on a tubular body (12) of insulating material and having a metal nucleus (10) inserted therein, said winding (13) of the inductor being connected to each winding (21) of the motor and to an electrical power supply network (24), characterized in that the winding (13) of the inductor is immersed in and cooled by a fluid (11) operating in the motor (18), and is achieved by winding around said tubular body (12) the same wire (20) coming from the winding (21) of the motor (18).

2. The device in accordance with claim 1, characterized in that the tubular body (12) is bounded on opposite ends by flanges (14,16) which hold the winding (13) stably positioned.

3. The device in accordance with any one of the preceding claims, characterized in that the metal nucleus (10) is traversed longitudinally by a passage (17).

4. The device in accordance with any one of the preceding claims, characterized in that the metal nucleus (10) is positioned stably in the tubular body (12) by Seger cones (15).

5. The device in accordance with any one of the preceding claims characterized in that the winding (13) is connected to the winding (21) of the motor by a first wire (20) and to the electrical power supply network (24) by a second wire (22), said first and second wires (20,22) being also connected directly together by another wire (25) provided with a switch (26).

6. Use of the device in accordance with any one of the preceding claims connected to each phase of an asynchronous motor (18) for control of hydraulic elevators.-

## Patentansprüche

1. Vorrichtung zum Reduzieren von Stromspitzen während des Startens eines Asynchronmotors (18) mit Wicklungen (21) zur Steuerung einer zugeordneten hydraulischen Hubeinrichtung, wobei die Vorrichtung einen Induktor aufweist, der aus einer Wicklung (13) aus Kupferdraht auf einem rohrförmigen Körper (12) aus Isoliermaterial und darin eingesetztem Metallkern (10) besteht, wobei die Wicklung (13) des Induktors mit jeder Wicklung (21) des Motors und einem elektrischen Versorgungsnetz (24) verbunden ist,
**dadurch gekennzeichnet,**
daß die Wicklung (13) des Induktors in ein Fluid (11) eingetaucht ist und durch das Fluid gekühlt wird, das in dem Motor (18) vorhanden ist, und durch Wickeln des gleichen, von der Wicklung (21) des Motors (18) kommenden Drahtes (20) um den rohrförmigen Körper (12) erhalten wird.

2. Vorrichtung nach Anspruch 1, dadurch gekennzeichnet, daß der rohrförmige Körper (12) an gegenüberliegenden Enden durch Flansche (14, 16) begrenzt ist, die die Wicklung (13) in stabiler Stellung halten.

3. Vorrichtung nach einem der vorhergehenden Ansprüche, dadurch gekennzeichnet, daß der Metallkern (10) in Längsrichtung von einem Durchlaß (17) durchquert wird.

4. Vorrichtung nach einem der vorhergehenden Ansprüche, dadurch gekennzeichnet, daß der Metallkern (10) durch Segerkegel (15) an dem rohrförmigen Körper (12) stabil positioniert ist.

5. Vorrichtung nach einem der vorhergehenden Ansprüche, dadurch gekennzeichnet, daß die Wicklung (13) mit der Wicklung (21) des Motors durch einen ersten Draht (20) und mit dem elektrischen Versorgungsnetz (24) durch einen zweiten Draht (22) verbunden ist, wobei die ersten und zweiten Drähte (20, 22) auch direkt miteinander über einen weiteren Draht (25) verbunden sind, der mit einem Schalter (26) versehen ist.

6. Verwendung der Vorrichtung nach einem der vorhergehenden Ansprüche in Verbindung mit jeder Phase eines Asynchronmotors (18) zur Steuerung hydraulischer Hubeinrichtungen.

## Revendications

1. Dispositif pour réduire des pointes de courant lors du démarrage d'un moteur asynchrone (18) comportant des enroulements (21) pour la commande d'un élévateur hydraulique qui lui est associé, ledit dispositif comprenant un inducteur constitué par un enroulement (13) de fil métallique en cuivre sur un corps tubulaire (12) en une matière isolante et dans lequel est inséré un noyau métallique (10), ledit enroulement (13) de l'inducteur étant relié à chaque enroulement (21) du moteur et à un réseau d'alimentation en courant électrique (24), caractérisé en ce que l'enroulement (13) de l'inducteur est plongé dans et refroidi par un fluide (11) travaillant dans le moteur (18) et est réalisé en enroulant, autour dudit corps tubulaire (12), le même fil métallique (20) que celui provenant de l'enroulement (21) du moteur (18).

2. Dispositif selon la revendication 1, caractérisé en ce que le corps tubulaire (12) est délimité, à ses extrémités opposées, par des brides (14, 16) qui maintiennent l'enroulement (13) en position stable.

3. Dispositif selon l'une quelconque des revendications précédentes, caractérisé en ce que le noyau métallique (10) est traversé en direction longitudinale par un passage (17).

4. Dispositif selon l'une quelconque des revendications précédentes, caractérisé en ce que la position du noyau métallique (10) est stabilisée dans le corps tubulaire (12) à l'aide de cônes de Seger (15).

5. Dispositif selon l'une quelconque des revendications précédentes, caractérisé en ce que l'enroulement (13) est relié à l'enroulement (21) du moteur par un premier fil métallique (20) et au réseau d'alimentation en courant électrique (24) par un second fil métallique (22), lesdits premier et second fils métalliques (20, 22) étant également reliés directement l'un à l'autre à l'aide d'un autre fil métallique (25) muni d'un commutateur (26).

6. Utilisation du dispositif selon l'une quelconque des revendications précédentes, relié à chaque phase d'un moteur asynchrone (18) pour la commande d'élévateurs hydrauliques.
